# FASCICULE DE BREVET EUROPEEN

(11) **EP 2 964 463 B1**
(45) Date de publication et mention de la délivrance du brevet: **25.11.2020**
(21) Numéro de dépôt: 14709901.4
(22) Date de dépôt: 28.02.2014
(51) Int. Cl.: B32B 17/10

(54) **TOIT DE VEHICULE**
FAHRZEUGDACH
VEHICLE ROOF

(30) Priorité: 04.03.2013 BE 201300142
(43) Date de publication de la demande: 13.01.2016
(73) Titulaire: AGC Glass Europe, 1348 Louvain-La-Neuve (BE)
(72) Inventeur: LINTHOUT, Sébastien, B-1390 Archennes (BE); LOSOT, Rotislav, B-1348 Ottignies-Louvain-la-Neuve (BE)
(74) Mandataire: Chabou, Samia
(86) Numéro de dépôt international: PCT/EP2014/053994
(87) Numéro de publication internationale: WO 2014/135467

(56) Documents cités:
- EP-A1- 0 825 478
- WO-A1-2009/004385
- GB-A- 2 403 731
- GB-A- 2 445 841
- US-A- 4 749 261
- US-A1- 2009 046 355
- US-A1- 2009 135 319
- US-A1- 2010 045 924

## Description

L'invention concerne les toits de véhicules constitués pour partie au moins d'un vitrage. De manière plus précise l'invention concerne les toits dont le vitrage recouvre une part importante de leur surface, voire la totalité de celle-ci.

Les toits vitrés se substituent pour une part croissante aux toits traditionnels qui sont partie de la carrosserie des véhicules. Le choix de ces toits est le fait des constructeurs d'offrir à leurs clients cette option donnant l'impression de l'ouverture du véhicule vers l'extérieur, à la manière d'un cabriolet, sans avoir les inconvénients de ces derniers, les toits maintenant le confort d'une berline traditionnelle. Pour cela les toits vitrés doivent satisfaire à de nombreuses exigences. Il convient tout d'abord de répondre aux obligations de sécurité. Les toits vitrés doivent satisfaire aux règlements qui imposent une résistance à l'éviction en cas d'accident. Dans ce sens ils doivent satisfaire aux règles désignées «R43». La résistance à l'éviction des passagers nécessite notamment le recours à des vitrages feuilletés.

La présence de vitrages feuilletés n'exclut pas la nécessité de limiter le poids. Pour cette raison les toits feuilletés utilisés doivent aussi présenter des épaisseurs bien maîtrisées. En pratique les vitrages de ces toits ont une épaisseur qui n'est pas supérieure à 10mm et de préférence pas supérieure à 8mm. Dans le poids de ces vitrages, les feuilles de verre représentent une part significative compte tenu de la masse volumique du verre bien supérieure à celle des feuilles plastiques intercalaires. Aussi l'épaisseur totale des feuilles de verre est de préférence limitée à 6mm et avantageusement à 5mm.

Le choix de toits vitrés, comme précisé ci-dessus, a pour but le gain de luminosité dans l'habitacle. Ce gain ne doit pas être contraire à d'autres propriétés qui assurent le confort des passagers, en particulier le confort thermique et le confort acoustique. Ce dernier est conservé voire amélioré par la présence de la structure feuilletée, en particulier lorsque celle-ci comporte des feuilles intercalaires choisies pour leur capacité d'amortissement des vibrations, sur le modèle de ce qui est mis en œuvre notamment pour les vitrages des pare-brise.

La présence de toits vitrés, motivée par l'augmentation de la luminosité, conduit à l'accroissement des transferts thermiques avec l'extérieur. Ceci est sensible dans le mécanisme d'effet de serre lorsque le véhicule est exposé à un rayonnement solaire intense, mais aussi dans les pertes thermiques de l'habitacle en période froide.

Le contrôle des conditions thermiques conduit à diverses mesures dont l'utilisation de vitrages à forte sélectivité. Ces conditions résultent du choix des verres utilisés (le plus souvent minéraux, mais qui peuvent aussi être organiques). Elles sont aussi le fait des filtres additionnels que comportent ces vitrages, notamment ceux constitués par des systèmes de couches réfléchissant sélectivement les infrarouges. L'art antérieur fait état de solutions répondant à ces exigences. C'est le cas en particulier du brevet EP1200256.

Le choix de toits vitrés a permis aussi de développer des fonctionnalités supplémentaires, par exemple l'intégration de systèmes photovoltaïques qui contribuent à la production électrique nécessaire au fonctionnement des divers organes des véhicules. La mise en œuvre de tels systèmes fait l'objet de nombreuses publications, et notamment du brevet EP1171294.

Par ailleurs le souhait d'un accroissement de luminosité dans l'habitacle n'est pas nécessairement permanent. L'utilisateur peut, selon le moment, préférer une luminosité moindre, ou simplement maintenir le caractère «privatif» qui isole l'habitacle des regards extérieurs.

Pour modifier la transmission lumineuse des vitrages en fonction des conditions d'utilisation, des solutions sont proposées antérieurement. Il s'agit notamment des vitrages dits «électro-commandés», tels que les vitrages comportant des moyens électro-chromes dans lesquels la variation est obtenue par modification de l'état d'ions colorés dans des compositions incluses dans ces vitrages. Il s'agit aussi de vitrages comprenant des couches de particules en suspension, qui selon l'application d'une tension électrique sont ordonnées ou non tels que les systèmes dits SPD (pour «suspended particles devices»).

Le développement des toits vitrés soulève d'autres questions et ouvre la voie à de nouvelles réalisations. Certaines fonctions peuvent, ou doivent être modifiées compte tenu des spécificités de ces toits. Un but de l'invention est de rendre l'utilisation des toits vitrés comportant les fonctionnalités indiquées ci-dessus mieux à même de répondre aux souhaits des constructeurs dans leurs performances et dans la simplification de leur utilisation.

Les toits dont la transmission lumineuse est modifiée par la mise en œuvre de SPD sont intéressants en raison notamment de la variation importante de transmission lumineuse qu'ils permettent. Dans les produits usuels de ce type, la variation de transmission entre ces deux états clair et obscur peut atteindre 40% ou plus, avec dans l'état obscur une transmission qui peut être extrêmement faible et quasi nulle. De façon analogue les systèmes électro-chromes permettent des variations importantes de la transmission lumineuse. Les toits comportant ces systèmes de contrôle de la luminosité, comme les électro-chromes ou les SPD, ont l'inconvénient de demeurer des produits relativement coûteux. Pour ce qui concerne les électro-chromes un autre inconvénient est la lenteur de transition entre les états clair et obscur.

Un souhait des constructeurs est de disposer de produits dont les propriétés s'apparentent à celles évoquées ci-dessus, mais obtenues avec des produits sensiblement moins coûteux.

Dans leur recherche, les constructeurs peuvent même envisager des produits dont les performances peuvent être différentes des précédentes au moins pour celles qu'ils estiment de moindre importance. A l'inverse certaines fonctionnalités restent déterminantes pour la mise en œuvre de ces toits à propriétés commandées. En premier les constructeurs veulent des systèmes dont la réaction à la commande soit pratiquement instantanée, contrairement à ce que l'on observe pour les électro-chromes. Parmi les éléments considérés comme déterminants figure la possibilité d'éviter la présence de velum. Le velum qui permet de recouvrir le vitrage intervient pour l'aspect privatif, et permet d'éviter l'éblouissement lorsque la lumière est trop intense. Accessoirement le velum contribue à la maîtrise du confort thermique dans l'habitacle.

Le velum constitue un élément relativement coûteux, pesant, encombrant dans l'habitacle, et mal commode s'il est manipulé manuellement, et facteur de complexité supplémentaire lorsqu'il est motorisé.

Le choix selon l'invention est donc de disposer d'un vitrage de toit qui ne nécessite pas cet élément.

Les toits selon l'invention doivent aussi répondre aux exigences des constructeurs dans toutes les caractéristiques optiques et énergétiques. Les toits doivent encore présenter des caractéristiques précises en termes de réflexion, en particulier vers l'intérieur du véhicule.

Les exigences des constructeurs sont aussi contraignantes pour la coloration en transmission comme en réflexion. Ces colorations en réflexion doivent être facilement assorties à celle de la carrosserie. Dans ce sens les colorations doivent être relativement neutres, notamment grises, ou légèrement bleues ou vertes. Sont à éviter les couleurs jugées peu flatteuses à savoir à dominante rouge ou jaune. De même la lumière dans l'habitacle ne doit pas présenter de coloration indésirable notamment à dominante jaune.

L'invention propose des toits vitrés tels que définis à la revendication 1. Le choix d'utiliser des vitrages comportant des moyens de type cristaux liquides dans les toits modifie sensiblement les caractéristiques des toits antérieurs comportant des systèmes électro-commandés SPD ou électro-chromes. En particulier ces moyens, s'ils permettent une modification de l'intensité de la luminosité dans l'habitacle, ont pour fonction de modifier le caractère privatif et l'effet anti-éblouissement.

Dans la littérature antérieure l'utilisation de film à cristaux liquides dans des vitrages a été envisagée pour la constitution de parois d'isolement visuel commandé. Dans ces applications la fonction principale est la transformation d'un vitrage essentiellement transparent en un vitrage simplement translucide. Ces applications n'impliquent pas de caractéristiques thermiques spécifiques. De même la transmission lumineuse n'est pas déterminante.

Selon l'invention, au contraire, la mise en œuvre dans des toits automobile requiert un ensemble de conditions bien précises rappelées ci-dessus.

Le choix des films LC dans des toits feuilletés permet de satisfaire au besoin de caractère privatif et à l'absence d'éblouissement.

Compte tenu de la structure des films LC et de leur mode d'action, pour une même charge de cristaux liquides par unité de volume de la partie active du film, il va de soi que l'effet diffusant croît avec l'épaisseur du film. Dans la pratique les produits disponibles commercialement conduisent à l'état non-activé à des diffusions très importantes et dépassant 95% et davantage, pour des épaisseurs généralement de moins de 0,5mm, ou même de moins 0,3mm. Des diffusions de cet ordre sont ordinairement suffisantes pour répondre à l'attente des constructeurs de sorte que des épaisseurs plus importantes apparaissent superflues.

A noter que dans la production des films LC, l'épaisseur intervient aussi dans le mode de conditionnement des constituants. A titre indicatif des produits de type PDLC («polymer dispersed liquid cristal») peuvent être relativement sensibles à la déformation sous pression. Pour prévenir des déformations indésirables le maintien de l'épaisseur peut être assuré par l'introduction dans le polymère de particules transparentes rigides formant autant de cales d'espacement. Il reste que pour ne pas altérer les propriétés optiques il est préférable de pouvoir limiter les épaisseurs et la présence en quantité de ces particules.

Une condition requise par les constructeurs est de faire en sorte, lorsque le film LC est soumis au champ électrique dans le mode activé, que la diffusion résiduelle, qualifiée également de «haze», ou voile soit aussi réduite autant que possible pour que la perception visuelle à travers le vitrage, au moins sous certaines incidences s'approche de la transparence.

Le « haze » est mesuré selon la norme ASTMD1003. Il faut souligner dans l'utilisation de LC pour commander les caractéristiques lumineuses que le flux lumineux transmis comprend la lumière diffusée et celle qui est éventuellement directement transmise. La mesure se fait avec sphère d'intégration pour tenir compte des spécificités de la lumière diffusée. L'ensemble mesuré est qualifié de «transmittance». La mesure de transmittance est effectuée selon la norme ISO 9050, la détermination est faite pour un illuminant D65 et pour un angle de 10°. De la même façon les mesures de réflexion sont faites suivant la même norme, même illuminant et même angle. La transmission énergétique est mesurée selon la norme ISO 13837.

Compte tenu de ce que l'absorption lumineuse organisée notamment par les feuilles de verre et celles des feuilles intercalaires réduit nécessairement comme précisé plus loin la lumière transmise, la présence de «haze» du fait du film LC est moins sensible pour l'observateur. Pour cette raison des taux de «haze» qui seraient considérés comme rédhibitoires pour des vitrages clairs sont néanmoins acceptables dans l'application en tant que toit. Néanmoins pour répondre à l'attente des constructeurs, le «haze» dans les toits selon l'invention, par le choix des films LC, est avantageusement maintenu inférieur à 8% et de préférence n'est pas supérieur à 6% lorsque le vitrage est activé par l'application du champ électrique approprié. La mesure en question est faite dans une direction sensiblement orthogonale à la surface du vitrage.

Le taux de diffusion, de façon connue, est modulable en fonction du champ électrique appliqué. L'orientation des cristaux est directement dépendante de ce champ. L'accroissement du champ reste limité à ce que les films peuvent supporter sans risque de claquage, correspondant à un court-circuit entre les électrodes qui recouvrent le matériau fonctionnel constitué essentiellement de polymère contenant les cristaux liquides. La tension supportable peut dépendre en partie de l'épaisseur du film. Pour les raisons indiquées précédemment cette épaisseur est limitée. Dans ces conditions la tension supportable pour les films usuels est de l'ordre de 220v.

Par ailleurs, en pratique pour les films disponibles dans le commerce, la diffusion n'est plus réduite de façon sensible au-delà d'un seuil qui ne dépasse pas des tensions appliquées de l'ordre de 110v. Pour la détermination du haze résiduel selon l'invention, la mesure est faite à cette valeur de 110v en mode alternatif de fréquence 50Hz. Les valeurs de haze indiquées ci-dessus sont mesurées dans des conditions extérieures usuelles, notamment de température.

Les films LC conservent toujours une diffusion résiduelle comme indiqué ci-dessus. Si cette diffusion doit être limitée dans la direction orthogonale à la surface du vitrage, elle reste aussi de préférence relativement faible sous des incidences qui s'écartent peu de la normale. Lorsque l'on s'écarte de la direction orthogonale, la diffusion tend à s'accroître. A l'état activé, la diffusion reste de préférence selon l'invention inférieure à 20%, et de façon particulièrement préférée inférieure à 15% pour un angle d'observation allant jusqu'à 20° par rapport à la normale à la surface.

Comme indiqué ci-dessus les diffusions résiduelles ne peuvent être totalement éliminées, mais leur perception est d'autant moins gênante que la lumière est en partie absorbée par les différents éléments constituant le vitrage. Le film LC contribue pour une partie limitée à cette absorption qu'il soit activé ou non. Le reste de l'absorption est principalement le fait des feuilles de verre et éventuellement des feuilles intercalaires.

Pour la constitution des toits il est préférable de limiter la lumière pénétrant dans l'habitacle. Celle-ci peut être relativement faible sans contrarier les souhaits des utilisateurs. Le choix de cette limitation du flux lumineux, transmis ou diffusé, tient aussi au fait qu'il conduit à la limitation de la pénétration de la chaleur. Si les rayons infrarouges sont un vecteur important de l'énergie pénétrant dans l'habitacle, une autre part très importante accompagne le rayonnement du domaine visible. Il est donc nécessaire pour maîtriser le flux énergétique de réduire sensiblement la part du rayonnement visible franchissant le vitrage.

Les vitrages selon l'invention sont composés de telle sorte que la lumière pénétrant par transmission et diffusion à l'état activé du film LC ne soit pas supérieure à 50% de la lumière incidente et de préférence inférieure à 40% voire même 30%. Cette proportion peut être beaucoup plus réduite. Néanmoins les vitrages selon l'invention présentent avantageusement un taux global de transmission et diffusion à l'état activé du film LC, qui n'est pas inférieur à 5% et de préférence pas inférieur à 10%.

La présence du film LC permet de moduler l'ensemble transmission diffusion selon l'état activé ou non du champ électrique. Dans le cas des vitrages comportant un film LC, le plus important est le fait que l'on passe d'un ensemble entièrement diffusant, et donc essentiellement translucide, à un état dans lequel la lumière transmise ne comporte qu'une faible fraction de diffusion comme indiqué ci-dessus. Néanmoins le passage d'un état à l'autre s'accompagne aussi d'une variation du flux lumineux entrant dans l'habitacle. En fonction de ce changement d'état, et en tenant compte de l'ensemble des absorptions aménagées comme indiqué ci-dessus, le rapport de lumière pénétrant à l'état activé à l'état non-activé est avantageusement d'au moins 1,5 et de préférence d'au moins 2. Ce rapport se retrouve pratiquement aussi dans celui des transmissions énergétiques.

Pour atteindre les transmissions lumineuses indiquées précédemment au moins une des feuilles de verre utilisées dans le vitrage est colorée. Avantageusement comme indiquée plus loin à propos des exemples les deux feuilles de verre sont colorées. Le vitrage peut aussi inclure des feuilles intercalaires colorées qui contribuent à l'établissement des conditions optiques recherchées. Avantageusement une feuille colorée est choisie de sorte que sous une épaisseur de 4mm sa transmission ne soit pas supérieure à 50%.

La présence de feuilles colorées dans les vitrages comportant un film LC contribue aussi à restituer des couleurs qui soient satisfaisantes. Le plus souvent, les films LC tendent à présenter une coloration légèrement jaune en particulier en réflexion. Il est souhaitable, pour éviter cette apparence perçue par les passagers du véhicule, de faire en sorte que la feuille de verre, et/ou une feuille intercalaire disposée entre le film LC et cette feuille de verre tournée vers l'habitacle soit colorée de façon à masquer cette nuance jaune. Le plus souvent l'on choisit une feuille de verre et/ou un intercalaire de coloration neutre, de préférence gris ou gris bleuté.

Le choix de couleur des feuilles verre et/ou d'intercalaires est tel que la coloration en réflexion dans l'habitacle conduise dans le système CIELab (illuminant D65 sous 10°) à des valeurs telles que :
10<L*<55, -10<a*<3 et -10<b*<5
et de préférence :
-6<a*<0 et -6<b*<0

Les toits selon l'invention, doivent encore avantageusement répondre à des exigences en ce qui concerne l'importance de la réflexion intérieure. Celle-ci, quel que soit l'état dans lequel est le film LC, est de préférence inférieure à 20%, et avantageusement inférieure à 15%

Pour des raisons non seulement d'esthétique, mais aussi de sécurité, les toits ne doivent pas présenter une réflexion excessive vers l'extérieur dans le domaine visible, que ce soit à l'état activé ou non. Elle est de préférence inférieure à 25%, et de façon particulièrement préférée inférieure à 20%.

Les constructeurs pour des raisons d'esthétique cette fois, demandent aussi que la réflexion à l'extérieur soit relativement neutre, autrement dit que la couleur apparente des toits ne soit pas trop accentuée. En particulier les teintes pourpres doivent être évitées. Des nuances grises ou bleutées peuvent s'harmoniser avec les teintes les plus répandues pour les véhicules.

Selon les données colorimétriques CIELab (illuminant D 65 sous 10°), la couleur en réflexion vers l'extérieur, à l'état activé ou non, est de préférence dans les limites suivantes :
10<L*<60, - 12< a* < 3 et de préférence - 7< a* < 2
- 12< b* < 5 et de préférence - 2< b*< 1

La couleur en transmission doit être aussi maîtrisée, essentiellement à l'état activé. A l'état non activé, la transmission étant très réduite la couleur est peu sensible. La transmission à l'état activé est de préférence telle que:
25<L*<75, - 10 < a* < 0 et de préférence - 8< a* < 0
- 10< b*< 10 et de préférence - 5< b*< 5

La feuille de verre tournée vers l'extérieur du véhicule est de préférence choisie pour ses qualités antisolaires. Il s'agit de préférence d'un verre à forte sélectivité (rapport de la transmission lumineuse au facteur solaire FS, ce dernier étant l'ensemble de l'énergie transmise directement et de celle réémise après absorption). De tels verres sont ceux qui absorbent fortement dans l'infrarouge. La sélectivité est avantageusement supérieure à 1,2 et de préférence supérieure à 1,4

Comme pour tous les toits vitrés la transmission énergétique résultant de l'exposition solaire doit être minimisée pour éviter l'échauffement excessif de l'habitacle. Comme indiqué ci-dessus, le choix des feuilles de verre contribue à limiter la transmission énergétique. Au-delà, la présence du film LC participe aussi comme filtre, ne serait-ce que par la limitation de la transmission lumineuse qu'il opère.

En pratique il est particulièrement souhaité que la transmission énergétique globale pénétrant dans l'habitacle, soit aussi restreinte que possible lorsque le véhicule est en stationnement, et donc que le film LC n'est pas activé. Selon l'invention la transmission énergétique du vitrage dans ces conditions est avantageusement inférieure à 12% et de préférence inférieure à 10% voire même inférieure à 8%. A l'état activé, la transmission énergétique est sensiblement plus élevée mais reste limitée du fait des autres constituants du vitrage.

Pour rester dans des conditions de transmission énergétique adéquates, en dehors des éléments déjà précisés, les vitrages selon l'invention peuvent aussi comprendre des couches minces sélectives filtrant préférentiellement les infrarouges. Des filtres de ce type sont notamment ceux comportant une ou plusieurs couches minces métalliques, notamment à base d'argent, associées à des couches minces diélectriques qui contribuent notamment à la sélectivité du filtre. Ces ensembles de couches sont disposés soit sur une feuille support, notamment de PET, insérée dans le feuilleté, soit pas application directe sur la feuille de verre. Dans les deux cas il est avantageux de faire en sorte que ce filtre soit situé dans le feuilleté au-dessus du film LC, améliorant la protection de ce film, même si celui-ci est moins sensible que d'autres produits modifiant la transmission sous commande électrique, comme les électro-chromes ou les SPD.

Si les films LC sont peu sensibles aux infrarouges, leurs composants peuvent être dégradés par une exposition excessive aux UV. Le choix des intercalaires permet de limiter de façon considérable cette exposition. C'est le cas en particulier de l'utilisation d'intercalaires de PVB, qui par nature font écran aux UV ne laissant passer qu'une très faible proportion de ceux-ci. Pour les films PVB de 0,38mm d'épaisseur plus de 95% des UV sont supprimés. Cette proportion peut dépasser 99%. Des polymères à base d'éthylène vinyl-acétate (EVA) sont aussi proposés qui renferment des composants leur conférant une très faible transmission des UV.

La présence d'un toit vitré modifie les conditions de confort thermique pour les occupants du véhicule. Si l'échauffement lorsque le véhicule est exposé au soleil conduit aux conditions indiquées ci-dessus, pour les passagers la présence de toits vitrés peut aussi conduire à ce qui est qualifié de sensation «d'épaule froide» lorsque la température extérieure est inférieure aux températures ambiantes de confort. Cette sensation est causée par une déperdition de chaleur depuis l'habitacle, par l'émission d'infrarouges lointains.

Dans la pratique, pour restaurer le confort des passagers, comme indiqué précédemment les constructeurs utilisent essentiellement un velum qui permet de couvrir de l'intérieur le vitrage sur toute sa surface. La présence d'un velum et des éléments qui lui sont associés, notamment pour son déploiement motorisé, est coûteuse et amène une surcharge et un encombrement non négligeables.

Pour éviter l'usage du velum, les toits selon l'invention minimisent la déperdition de chaleur. Pour parvenir à ce résultat, l'invention propose l'application de couches low-e (couche basse-émissive) sur la face du vitrage tournée vers l'habitacle. Dans la désignation traditionnelle des faces des vitrages feuilletés il s'agit de la position 4. La numérotation des faces se fait en partant de la face exposée à l'atmosphère externe. Les couches en question font office de filtre réfléchissant sélectivement les rayons infrarouge lointains émis depuis l'habitacle, sans constituer un obstacle important à la transmission des rayons du domaine visible de l'extérieur vers l'intérieur.

La présence de couches minces en position 4 est choisie en dépit du fait que dans cette position les couches ne sont pas protégées contre des altérations notamment mécaniques. Il est possible de choisir des couches low-e qui offrent une résistance mécanique et chimique suffisante.

Avantageusement, compte tenu de l'importance de disposer de revêtements de bonne résistance mécanique, on choisit des couches dites «dures», telles que celles produites par des techniques de type pyrolytique, CVD ou PECVD. Mais des systèmes low-e peuvent aussi être préparés par les techniques de pulvérisation cathodique sous vide, à condition que ces systèmes soient protégés par des couches suffisamment résistantes.

Selon l'invention il est préféré d'utiliser un système de couches basse-émissives, dont l'émissivité est inférieure à 0,3 et de préférence inférieure à 0,2, et de façon particulièrement préférée inférieure à 0,1.

Les systèmes "low-e" (bas-émissifs) pyrolytiques les plus usuels comportent une couche d'oxyde d'étain dopé déposée sur une première couche ayant pour rôle de neutraliser la couleur en réflexion. La couche au contact du verre est ordinairement une couche de silice ou d'oxy-carbure de silicium, éventuellement modifiée par des additifs. Les couches d'oxyde d'étain comparées aux couches des systèmes déposés par pulvérisation cathodique, sont relativement épaisses, plus de 200nm, et pour certaines plus de 450nm. Ces couches épaisses sont suffisamment résistantes pour supporter d'être exposées à des épreuves mécaniques et/ou chimiques.

Le film de contrôle de la transmission lumineuse est nécessairement alimenté électriquement. Son raccordement au système général d'alimentation électrique du véhicule se fait nécessairement à partir des bords du vitrage. Les conduites électriques de connexion ne sont pas normalement transparentes. Pour ne pas rompre la transparence même limitée du vitrage, on s'efforce de dissimuler ces conduites dans les zones périphériques du vitrage, lesquelles comportent normalement des parties émaillées opaques destinées notamment à masquer les marques irrégulières de collage du vitrage sur la carrosserie.

Dans la préparation des toits selon l'invention de manière générale il convient de considérer les capacités des éléments constitutifs à supporter les traitements qui conduisent à la mise en forme et à l'assemblage du vitrage. Les toits des véhicules présentent en général des courbures relativement peu accentuées à l'exception éventuellement de celles des bords de ces vitrages. La mise en forme de feuilles de verre minéral comporte, au moins pour l'une d'entre elles et le plus souvent pour les deux, un traitement qui nécessite un passage à haute température (650-700°C) conduisant à un ramollissement du verre.

Une alternative consiste à procéder à la formation d'un vitrage feuilleté associant une feuille bombée relativement épaisse à une feuille plane de moindre épaisseur qui est mécaniquement forcée pour épouser la courbure de la feuille épaisse. La mise en œuvre de cette technique n'est envisagée que dans l'hypothèse où les courbures imposées restent relativement modestes compte tenu des contraintes supportables notamment par les feuilles de verre. Ce type d'assemblage est par exemple tel que décrit dans la demande BE20110415 (déposée le 4/7/2011) ou encore dans la demande BE20120036 (déposée le 16/1/2012). Dans le cas de ce type d'assemblage le système de couches même relativement fragile, s'il est placé sur la feuille plane, n'est exposé qu'à la température de passage à l'étuve qui conclut l'assemblage du feuilleté.

Pour ce mode d'assemblage la feuille de verre plane est avantageusement une feuille de verre trempé chimiquement.

Dans la préparation des toits selon l'invention de manière générale il convient de considérer l'aptitude des éléments constitutifs à supporter les traitements qui conduisent à la mise en forme et à l'assemblage du vitrage. En pratique les films LC sont sensibles à l'élévation de température. Au-delà de 70°C ils ne sont en général plus commandés par les variations de champs électriques. Cette modification est cependant réversible de sorte que les traitements thermiques auxquels leur assemblage dans le feuilleté les conduit, ne les altèrent pas. Le traitement en question est le plus souvent celui de passage à l'étuve à 130°C environ.

Il est apparu aux inventeurs que l'assemblage d'un film LC dans un vitrage feuilleté introduit souvent une modification concernant la diffusion résiduelle. Sans que le mécanisme ait été étudié de manière précise, il a été constaté une réduction du haze résiduel dans le feuilleté par rapport à celui observé sur le film seul. Cette réduction limitée tient peut être à une modification de l'état des surfaces externes, celle du film seul étant constitué des parois des électrodes (film PET le plus souvent), alors que dans le produit feuilleté les surfaces externes sont celles des feuilles de verre dont la rugosité est très réduite.

L'insertion du film LC dans le feuilleté est de préférence facilitée par la mise en place d'un logement aménagé dans la ou les feuilles intercalaires.

Disposer sur un véhicule d'un toit vitré vise au moins en partie un objectif de nature esthétique autant que fonctionnelle. Pour cette raison il est préférable que tous les moyens associés à ces toits contribuent à la réalisation de cet objectif.

La commande du film LC peut comprendre de simples interrupteurs. Si l'on souhaite disposer un interrupteur sur le toit vitré lui-même, il est souhaitable qu'il ne fasse pas obstacle à la transparence à l'origine du choix des toits vitrés.

L'invention propose d'utiliser des moyens de commande du film LC qui soient également essentiellement transparents. A cet effet l'invention propose d'utiliser des interrupteurs dont la mise en œuvre est déclenchée par l'intermédiaire de relais actionnés par une impulsion liée à une grandeur électrique. Selon l'invention, l'interrupteur utilisé est du type capacitif. Ce mode est celui qui permet d'utiliser au mieux la structure même des éléments inclus dans le toit.

A titre indicatif un capteur capacitif peut être du type à contact direct. L'élément sensible est par exemple une zone délimitée dans la couche low-e située sur la face tournée vers l'habitacle. Les couches low-e étant conductrices servent de capteur pour la commande du relais d'interruption. L'avantage du contact direct est que la modification de capacité induite par contact peut être relativement importante de sorte que le seuil commandant l'interrupteur peut être suffisamment élevé pour écarter tout déclenchement parasite.

Il convient notamment dans le réglage de la sensibilité de faire en sorte que le seuil de déclenchement soit supérieur à celui qui correspond par exemple à la présence d'eau sur la feuille de verre extérieure. Une couche interposée permet d'éviter les effets parasites. Les électrodes du film LC constituent de fait un écran contre les influences provenant de l'extérieur.

L'invention est décrite de manière détaillée en se référant aux exemples illustrés par les planches de dessins dans lesquelles :
- la figure 1 présente en perspective éclatée, des éléments d'un vitrage selon l'invention ;
- la figure 2 présente de manière schématique les éléments de la figure 1 après assemblage
- la figure 3 montre un détail du film LC de la figure 1 ;
- la figure 4 montre de manière schématique un ensemble selon l'invention comportant un filtre infrarouge ;
- la figure 5 présente de façon schématique l'assemblage de la figure 2 complétée du filtre infrarouge.

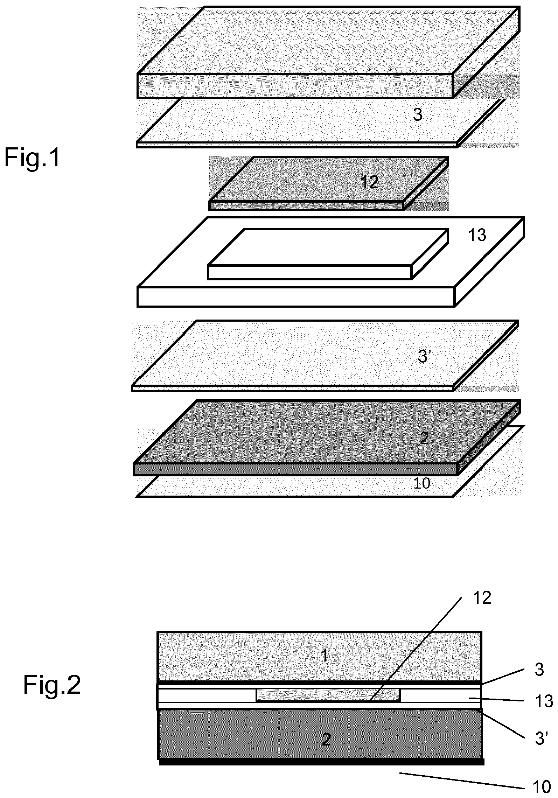

L'ensemble des éléments de la figure 1 est un exemple illustratif de réalisation selon l'invention. Les éléments sont présentés tels qu'avant leur assemblage. La figure 2 reprend en coupe la structure correspondant aux éléments de la figure 1 après assemblage.

La figure 1 ne montre pas les courbures des feuilles par souci de clarté. Dans la pratique les toits, vitrés ou non, présentent des courbures lesquelles sont ordinairement plus accentuées sur les bords à l'endroit de la fixation à la carrosserie pour un accostage choisi pour son «design», l'aérodynamique et l'aspect «flush» correspondant à une bonne continuité de surface entre les éléments contigus.

Le vitrage de la figure 1 comprend deux feuilles de verre, externe 1, et interne 2. Le plus fréquemment ces deux feuilles sont de verre coloré fortement absorbant, de telle sorte que la transmission lumineuse soit limitée par le seul effet de ces deux feuilles à moins de 50%, et dans une configuration de ce type de préférence à moins de 30%.

Des verres utilisés pour ces feuilles sont par exemple les verres gris tels que décrits dans le brevet FR2738238 ou dans le brevet EP1680371, ou des verres gris à nuance verte tel que décrits dans EP 887320, ou à nuance bleu comme dans EP1140718.

Les feuilles de verre 1 et 2 sont, dans un exemple, respectivement de 1,6mm et 2,6mm d'épaisseur. La feuille 1 est d'un verre vert dont les caractéristiques optiques sont sous 4mm d'épaisseur et un illuminant A:
TL A4 27,3% ; TE4 14,8 % ; λ_{D} 486nm ; P 18
(λ_{D} est la longueur d'onde dominante et P est la pureté d'excitation).
La feuille 2 est de verre gris dont les caractéristiques sont :
TL A4 17% ; TE4 15 % ; λ_{D} 490nm ; P 1,8
La forte absorption de cette feuille est avantageusement choisie pour masquer les nuances indésirables provenant du film LC. A défaut d'une feuille de verre colorée une feuille de verre clair peut être utilisée, mais dans ce cas avantageusement la feuille intercalaire 3' est colorée.

Le film LC est de 0,38mm d'épaisseur.

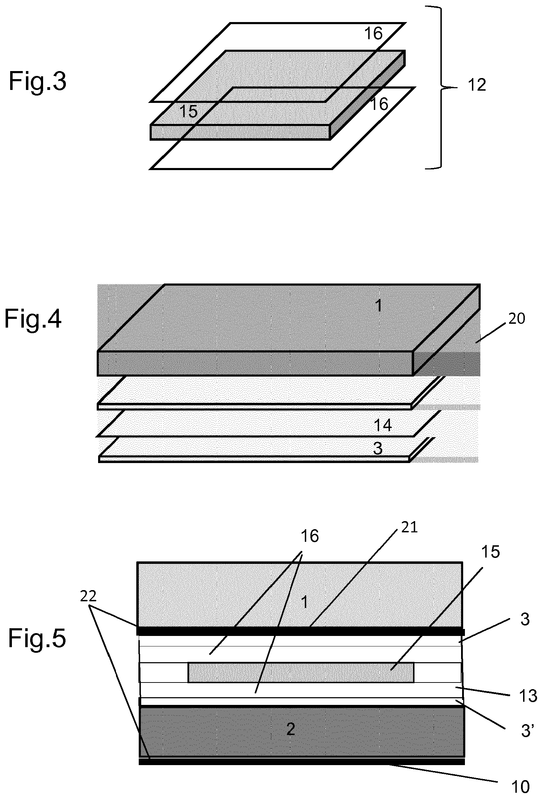

A la figure 1, les feuilles de verre sont présentées sans les motifs émaillés qui traditionnellement sont utilisés pour masquer les bords des vitrages. Des émaux de ce type seraient par exemple disposés sur la face interne de la feuille 1, donc en position 2, dissimulant l'ensemble des collages et connexions localisés au bord du vitrage. Les émaux de masquage peuvent aussi être en position 4, autrement dit sur la face du vitrage exposée à l'intérieur de l'habitacle. Mais dans cette position, pour une observation de l'extérieur du véhicule, ils ne masquent pas les éléments inclus dans le feuilleté. Il est aussi possible de disposer les masquages en position 2 et en position 4 comme illustré à la figure 5.

Des feuilles intercalaires de matériau thermoplastique (3, 3' et 13) sont disposées entre les feuilles de verre pour assurer l'assemblage du feuilleté.

Le film LC est représenté schématiquement en 12. Il ne couvre pas la totalité du vitrage. Les bords du film LC ne doivent pas entrer contact avec l'atmosphère extérieure, en particulier pour protéger les cristaux de l'humidité. Pour prévenir tout contact avec l'atmosphère, le film LC 12 est entièrement enveloppé dans les différentes feuilles de matériau intercalaire.

Eventuellement les bords du film LC 12 sont recouverts d'une feuille inerte, par exemple de PET, qui évite le contact sur ces bords de la partie contenant les cristaux liquides avec l'intercalaire 13. Selon sa nature, cet intercalaire est susceptible, en particulier au cours de l'assemblage de faire pénétrer des éléments de type plastifiant qui peuvent altérer les cristaux liquides.

Pour envelopper le film 12 à sa périphérie, la feuille intercalaire 13 d'épaisseur voisine de celle du film LC comporte avantageusement une découpe appropriée dans laquelle le film vient se loger.

La figure 1 montre la feuille 13 constituée d'une seule pièce dans laquelle un évidement est aménagé. Il est possible de remplacer cette pièce unique par un ensemble de bandes juxtaposées entourant le film 12, ces pièces fusionnant lors de l'étuvage.

La présence de la feuille 13 isole le film LC et simultanément assure une répartition uniforme de la pression exercée sur les constituants du vitrage lors de son assemblage. La feuille 13 peut être ou non de même nature que les intercalaires 3 et 3'.

Dans un exemple de réalisation, les feuilles sont de PVB de 0,38mm d'épaisseur chacune.

La structure des films de type LC est schématisée à la figure 3. Cette structure comporte un élément central 15 constitué d'un polymère contenant les cristaux liquides sensibles à l'application de la tension électrique. Le film est du type PDLC (polymer dispersed liquid cristal). De part et d'autre de cet élément central 15, et s'étendant sur chacune des faces de celui-ci, deux électrodes 16 permettent d'appliquer la tension nécessaire à la commande. De manière connue les électrodes 16 sont avantageusement constituées de feuilles essentiellement transparentes revêtues de couches minces conductrices, le plus usuellement des feuilles de polytéréphtalate d'éthylène glycol (PET) de quelques dizaines de microns d'épaisseur qui combinent une bonne transparence à une résistance mécanique élevée. Sur ces feuilles les couches conductrices sont avantageusement du type TCO (thin conductive oxide), tel que les couches d'ITO (indium tin oxide).

Comme indiqué ci-dessus, les composants des films LC peuvent être sensibles au vieillissement. Pour leur conférer la longévité souhaitée le film est normalement protégé par des filtres interposés entre la feuille de verre externe 1 exposée au rayonnement solaire, et le film LC 15.

Des filtres infrarouges sont utilisés dans de nombreuses applications dans les vitrages antisolaires ou dans les vitrages bas-émissifs. Ils sont généralement constitués de couches minces d'oxydes conducteurs, ou mieux, car beaucoup plus performants de couches métalliques suffisamment minces pour être pratiquement transparentes. Dans ces filtres les couches métalliques sont associées à des couches diélectriques également minces et transparentes qui donnent à l'ensemble la sélectivité nécessaire. Le plus souvent pour améliorer cette sélectivité, qui s'accompagne de réflexion que l'on s'efforce de rendre aussi neutre que possible, les filtres comportent une pluralité de couches métalliques lesquelles sont le plus souvent à base d'argent.

Les couches filtrant les infrarouges sont soit appliquées sur la feuille de verre externe soit introduites par le biais d'une feuille polymère intercalaire, notamment du type PET. La figure 4 montre un détail d'un assemblage de ce type dans lequel, sous la feuille de verre externe 1, une feuille 14 portant le filtre infrarouge, est disposée entre deux feuilles 3 et 20 de matériau intercalaire. Dans la mesure où le support des couches de type PET n'est pas lui-même de nature à adhérer au verre, il est nécessaire de l'introduire entre deux feuilles intercalaires thermoplastiques. L'utilisation d'un film support permet de ne pas soumettre les couches fragiles à des températures importantes. Dans ce cas la seule contrainte reste la température imposée par passage à l'étuve au moment de l'assemblage. La contrepartie est le fait de devoir rajouter une feuille intercalaire qui accroît l'épaisseur de l'ensemble.

Selon l'invention il est préféré de procéder avec un système de couches déposé directement sur la feuille de verre externe. Mais comme indiqué, si l'on choisit des filtres très performants, comme ceux comprenant des couches métalliques, ces couches sont appliquées par des techniques de pulvérisation cathodique, techniques opérées sur des feuilles planes. Par suite, cette solution implique que ces couches subissent les traitements thermiques lors de la mise en forme de cette feuille de verre.

Le choix du système de couches est avantageusement celui de systèmes à plusieurs couches d'argent pour obtenir un filtre efficace et qui permette le contrôle de la coloration notamment en réflexion. Un ensemble de couches particulièrement efficace est tel que décrit dans la demande WO2011/147875. Dans cette demande le système préconisé comporte trois couches d'argent et des couches diélectriques, l'ensemble étant choisi, notamment les épaisseurs des couches d'argent, de telle sorte que la coloration en réflexion soit satisfaisante même sous de faibles incidences d'observation.

L'ensemble des composants de la figure 1 comprend encore un système de couches bas-émissif 10 appliqué sur la feuille de verre interne 2, sur la face tournée vers l'habitacle. La présentation de la figure 1, montre ce système détaché pour plus de clarté mais en fait il n'est pas dissociable de la feuille su laquelle il est déposé.

Un exemple de système low-e répondant aux propriétés recherchées est constitué d'une couche d'oxyde d'étain dopé à 2% atomique de fluor, dont l'épaisseur est de 470nm. Cette couche est déposée sur une couche au contact du verre, composée d'oxy-carbure de silicium de 75nm d'épaisseur. Les deux couches sont déposées par CVD. Sur une feuille de verre clair de 4mm d'épaisseur, ce système conduit à une émissivité d'environ 0,1.

D'autre systèmes de couches low-e peuvent être produits par une technique de pulvérisation cathodique tout en conservant une résistance mécanique suffisante. Des systèmes de ce type sont par exemple composés d'oxydes notamment des couches à base d'oxyde de titane en association avec d'autres oxydes métalliques notamment d'oxyde de zirconium. Des couches de ce type sont décrites en particulier dans la demande WO2010/031808.

A titre d'exemple encore un système utilisable comporte une couche d'un alliage de chrome et de zirconium. Pour protéger cette couche métallique déposée par pulvérisation cathodique, elle est prise entre deux couches de nitrure de silicium. Cet ensemble conduit aussi à une émissivité satisfaisante avec une réduction de la transmission lumineuse qui peut atteindre 10%, réduction qui pour l'usage considéré ne constitue pas un inconvénient.

L'utilisation de ces systèmes bas émissifs améliore considérablement le confort dans l'habitacle en période froide et peut rendre superflu l'usage d'un velum.

La figure 5 présente de façon schématique, un vitrage selon l'invention après assemblage de ses différents constituants. Les dimensions ne sont pas présentées de manière à respecter les valeurs relatives. Notamment l'épaisseur du film LC et des films portant les éléments conducteurs sont très exagérées.

A la figure 5 un système de couches filtrant les infrarouges est représenté en 21. Ce système est directement appliqué sur la feuille de verre 1 sur la face 2. De façon analogue, un système low-e 10 est appliqué sur la feuille de verre 2 sur la face 4.

Des bandes d'émail 22 sont représentées sur les bords du vitrage. Ces bandes émaillées sont appliquées par des techniques de sérigraphie sur les feuilles de verre préalablement recouvertes des couches. Les bandes d'émail sont disposées sur la figure 4 de telle sorte qu'elles couvrent les limites du film LC 15. Elles dissimulent ces limites aussi bien de l'extérieur que de l'intérieur du véhicule. Elles servent aussi à masquer les connexions électriques non représentées qui alimentent les électrodes du film LC.

A titre d'exemple un vitrage selon l'invention présentant la structure suivante de l'extérieur à l'intérieur
- feuille de verre vert (composition telle que dans le brevet EP0887320) de 2,1mm d'épaisseur
- feuille de PVB clair de 0,76mm
- film PDLC (avec les deux électrodes constituées de feuilles PET revêtue d'une couche conductrice d'oxyde d'indium)
- feuille de PVB gris de 0,38mm
- feuille de verre clair de 3,15mm, revêtue d'un système de couches low-e composé comme indiqué ci-dessus d'une couche de silice recouverte d'une couche d'oxyde d'étain dopé.

Les électrodes du film PDLC sont alimentées en courant AC de 50Hz, et sous une différence de potentiel qui s'élève à 110v. Les propriétés mesurées pour ce vitrage sont données dans le tableau suivant :

| | haze | TL | TE | Moon | | | transmission | | | réflexion | | |
|---|---|---|---|---|---|---|---|---|---|---|---|---|
| | | | | FS | Re | g 100 | L* | a* | b* | L* | a* | b* |
| «off»int | ≈ 100 | 10,7 | 7,4 | 29 | 9,8 | 13,5 | 39 | -4,5 | 5,5 | 38,4 | -4,5 | -5,8 |
| «off»ext | | | | 30 | 6,3 | 13,8 | | | | 34,8 | -6,4 | -2,8 |
| «on»int | 4,9 | 20,2 | 13,2 | 33 | 9,5 | 19,1 | 52 | -5,9 | 0,9 | 37,8 | -4,6 | -4,8 |
| «on»ext | | | | 34 | 6 | 19,3 | | | | 34 | -6,4 | -0,8 |

Les colorations en transmission et réflexion sont données pour l'illuminant D65 sous un angle de 10°.

## Revendications

1. Toit de véhicule automobile vitré et feuilleté à transmission lumineuse variable, offrant un confort optique et thermique amélioré, comprenant deux feuilles de verre externe et interne réunies au moyen de feuilles intercalaires thermoplastiques, un ensemble de régulation de la transmission lumineuse de type film à cristaux liquides (LC) incorporé dans le feuilleté entre les deux feuilles de verre, et un système de couches bas-émissives disposé en face 4 du vitrage, vitrage dont la transmission lumineuse à l'état activé du film LC, mesurée selon EN 410 avec sphère d'intégration, est au plus de 50% et de préférence au plus de 40% et de façon particulièrement préférée au plus de 30% et dans lequel le système de couches bas-émissives est constitué comme électrodes d'un interrupteur capacitif commandant le film à cristaux liquides.

2. Toit selon la revendication 1 dont la transmission lumineuse totale, directe et diffusée, à l'état activé du film LC, est au moins égale à 5% de la lumière incidente, et de préférence au moins égale à 10%.

3. Toit selon l'une des revendications précédentes dans lequel le film LC est choisi de telle sorte qu'à l'état activé par l'application du champ électrique de commande, le «haze» mesurant la diffusion de la lumière selon la norme ASTMD1003, orthogonalement à la surface du vitrage ne soit pas supérieur à 8% et de préférence pas supérieur à 6%.

4. Toit selon l'une des revendications précédentes dans lequel le film LC est choisi de sorte qu'à l'état activé par l'application du champ électrique de commande, le «haze» mesurant la diffusion de la lumière selon la norme ASTMD1003, pour un angle allant jusqu'à 20° par rapport à la normale à la surface du vitrage, ne soit pas supérieur à 20% et de préférence pas supérieur à 15%.

5. Toit selon l'une des revendications précédentes dans lequel le rapport de la transmission lumineuse totale, directe et diffusée, à l'état activé, à la transmission lumineuse totale, à l'état non-activé, est d'au moins 1,5 et de préférence d'au moins 2.

6. Toit selon l'une des revendications précédentes dans lequel la transmission énergétique mesurée selon la norme ISO 13837, à l'état non activé du LC, n'est pas supérieure à 12%, et de préférence pas supérieure à 10%.

7. Toit selon l'une des revendications précédentes dans lequel le système de couches bas-émissives est choisi de façon qu'appliqué sur une feuille de verre float clair de 4mm d'épaisseur, il présente une émissivité qui n'est pas supérieure à 0,3 et de préférence pas supérieure à 0,2, et de façon particulièrement préférée pas supérieure à 0,1.

8. Toit selon la revendication 7 dans lequel le système de couches bas-émissives comprend au moins une couche d'oxyde d'étain dopé.

9. Toit selon la revendication 8 dans lequel la couche d'oxyde d'étain est dopé au fluor et présente une épaisseur qui n'est pas inférieure à 200nm.

10. Toit selon la revendication 8 ou la revendication 9 dans lequel le système de couches bas-émissives comprend, sous la couche d'oxyde d'étain, une couche à base de silice ou d'oxy-carbure de silicium.

11. Toit selon l'une des revendications précédentes comprenant un système de couches réfléchissant sélectivement les infrarouges disposé entre le verre externe et le film LC.

12. Toit selon la revendication 11 dans lequel le filtre infrarouge est constitué d'un ensemble de couches minces à base d'argent et de couches diélectriques pour améliorer la sélectivité.

13. Toit selon la revendication 12 dans lequel le système de couches comprend au moins trois couches d'argent, séparées les unes des autres par des couches diélectriques.

14. Toit selon l'une des revendications précédentes comprenant au moins une feuille de verre colorée dont la transmission lumineuse sous une épaisseur de 4 mm est au plus égale à 50%.

15. Toit selon l'une des revendications précédentes comprenant au moins une feuille de verre dont la sélectivité est au moins de 1,2 et de préférence d'au moins 1,4.

16. Toit selon l'une quelconque des revendications précédentes comprenant au moins une feuille intercalaire colorée.

17. Toit selon l'une des revendications précédentes dans lequel les composants sont choisis de sorte que la réflexion lumineuse visible vers l'intérieur du véhicule, quel que soit l'état activé ou non-activé du LC, ne dépasse pas 20% et, de préférence, pas 15%.

18. Toit selon l'une des revendications précédentes dont la combinaison des composants conduit à une coloration en réflexion vers l'intérieur mesurée dans le système CIELab, pour l'illuminant D65 sous 10°, tel qu'à l'état activé ou non
10<L*<55
-10<a*<3 et
-10<b*<5.

## Patentansprüche

1. Verglastes und geschichtetes Kraftfahrzeugdach mit veränderlicher Lichtdurchlässigkeit, das einen verbesserten optischen und thermischen Komfort bietet und eine äußere und eine innere Glasscheibe, die durch thermoplastische eingefügte Folienmittel miteinander verbunden sind, eine Lichtdurchlässigkeit-Regulierungsanordnung des Typs Flüssigkristallschicht (LC), die in die Schichtanordnung zwischen den beiden Glasscheiben eingefügt ist, und ein System niedrigemissiver Schichten, das gegenüber der Verglasung angeordnet ist, umfasst, wobei der Lichtdurchlässigkeitsgrad der Verglasung im aktivierten Zustand der LC-Schicht, gemessen gemäß EN 410 mit einer Fotometerkugel, höchstens 50 % und vorzugsweise höchstens 40 % und insbesondere bevorzugt höchstens 30 % beträgt, wobei das System niedrigemissiver Schichten in Form von Elektroden eines kapazitiven Ein/Aus-Schalters, der die Flüssigkristallschicht steuert, gebildet ist.

2. Dach nach Anspruch 1, dessen gesamter Lichtdurchlässigkeitsgrad, direkt und gestreut, im aktiven Zustand der LC-Schicht wenigstens gleich 5 % des auftreffenden Lichts und vorzugsweise wenigstens gleich 10 % beträgt.

3. Dach nach einem der vorhergehenden Ansprüche, wobei die LC-Schicht in der Weise gewählt ist, dass im aktivierten Zustand durch Anlegen des elektrischen Steuerfeldes die "Trübung", die die Streuung des Lichts gemäß der Norm ASTMD1003 misst, senkrecht zu der Verglasungsoberfläche nicht größer als 8 % und vorzugsweise nicht größer als 6 % ist.

4. Dach nach einem der vorhergehenden Ansprüche, wobei die LC-Schicht in der Weise gewählt ist, dass im aktivierten Zustand durch Anlegen des elektrischen Steuerfeldes die "Trübung", die die Streuung des Lichts gemäß der Norm ASTMD1003 misst, für einen Winkel bis 20° in Bezug auf die Normale der Verglasungsoberfläche nicht größer als 20 % und vorzugsweise nicht größer als 15 % ist.

5. Dach nach einem der vorhergehenden Ansprüche, wobei das Verhältnis des gesamten Lichtdurchlässigkeitsgrades, direkt und gestreut, im aktivierten Zustand zu dem gesamten Lichtdurchlässigkeitsgrad im nicht aktivierten Zustand wenigstens 1,5 und vorzugsweise wenigstens 2 ist.

6. Dach nach einem der vorhergehenden Ansprüche, wobei die energetische Durchlässigkeit, die gemäß der Norm ISO 13837 gemessen wird, im nicht aktivierten Zustand der LC nicht größer als 12 % und vorzugsweise nicht größer als 10 % ist.

7. Dach nach einem der vorhergehenden Ansprüche, wobei das System niedrigemissiver Schichten in der Weise gewählt ist, dass es dann, wenn es auf eine klare FloatGlasscheibe mit 4 mm Dicke aufgebracht ist, eine Emissivität aufweist, die nicht größer als 0,3 und vorzugsweise nicht größer als 0,2 und besonders bevorzugt nicht größer als 0,1 ist.

8. Dach nach Anspruch 7, wobei das System niedrigemissiver Schichten wenigstens eine dotierte Zinnoxidschicht enthält.

9. Dach nach Anspruch 8, wobei die Zinnoxidschicht mit Fluor dotiert ist und eine Dicke aufweist, die nicht kleiner als 200 nm ist.

10. Dach nach Anspruch 8 oder Anspruch 9, wobei das System niedrigemissiver Schichten unter der Zinnoxidschicht eine Schicht auf Basis von Siliziumoxid oder von Oxy-Siliziumcarbid enthält.

11. Dach nach einem der vorhergehenden Ansprüche, das ein System von Schichten enthält, die Infrarotlicht selektiv reflektieren und zwischen dem äußeren Glas und der LC-Schicht angeordnet sind.

12. Dach nach Anspruch 11, wobei der Infrarotfilter durch eine Anordnung von Dünnschichten auf Basis von Silber und von dielektrischen Schichten gebildet ist, um die Selektivität zu verbessern.

13. Dach nach Anspruch 12, wobei das System von Schichten wenigstens drei Silberschichten enthält, die durch die dielektrischen Schichten voneinander getrennt sind.

14. Dach nach einem der vorhergehenden Ansprüche, das wenigstens eine gefärbte Glasscheibe umfasst, deren Lichtdurchlässigkeit unter einer Dicke von 4 mm höchstens gleich 50 % ist.

15. Dach nach einem der vorhergehenden Ansprüche, das wenigstens eine Glasscheibe umfasst, deren Selektivität wenigstens 1,2 und vorzugsweise wenigstens 1,4 ist.

16. Dach nach einem der vorhergehenden Ansprüche, das wenigstens eine gefärbte Zwischenscheibe umfasst.

17. Dach nach einem der vorhergehenden Ansprüche, wobei die Komponenten in der Weise gewählt sind, dass die Reflexion von sichtbarem Licht in den Innenraum des Fahrzeugs unabhängig davon, ob die LC aktiviert ist oder nicht, 20 % und vorzugsweise 15 % nicht überschreitet.

18. Dach nach einem der vorhergehenden Ansprüche, wobei die Kombination von Komponenten zu einer Verfärbung bei Reflexion in den Innenraum, die in dem System CIELab für die Lichtart D65 unter 10° unabhängig vom aktivierten oder nicht aktivierten Zustand gemessen wird, führt:
10 < L* < 55
-10 < a* < 3 und
-10 < b* < 5.

## Claims

1. Glazed and laminated motor vehicle roof with variable light transmission, offering enhanced optical and thermal comfort, comprising two outer and inner sheets of glass joined by means of thermoplastic separating sheets, a light transmission regulation assembly of liquid crystal (LC) film type incorporated in the lamination between the two sheets of glass, and a system of low-emissive layers disposed facing 4 the glazing, glazing whose light transmission in the activated state of the LC film, measured according to EN 410 with integration sphere, is at most 50% and preferably at most 40% and particularly preferably at most 30%, and in which the system of low-emissive layers is constructed as electrodes of a capacitive switch controlling the liquid crystal film.

2. Roof according to Claim 1, whose total light transmission, direct and diffused, in the activated state of the LC film, is at least equal to 5% of the incident light, and preferably at least equal to 10%.

3. Roof according to one of the preceding claims, wherein the LC film is chosen such that, in the activated state by the application of a controlling electrical field, the "haze" measuring the diffusion of the light according to the ASTMD1003 standard, orthogonally to the surface of the glazing, is not greater than 8%, and preferably not greater than 6%.

4. Roof according to one of the preceding claims, wherein the LC film is chosen such that, in the activated state by the application of the controlling electrical field, the "haze" measuring the diffusion of the light according to the ASTMD1003 standard, for an angle ranging up to 20° with respect to the surface of the glazing, is not greater than 20% and preferably not greater than 15%.

5. Roof according to one of the preceding claims, wherein the ratio of the total light transmission, direct and diffused, in the activated state, to the total light transmission, in the non-activated state, is at least 1.5 and preferably at least 2.

6. Roof according to one of the preceding claims, wherein the energy transmission measured according to the ISO 13837 standard, in the non-activated state of the LC, is not greater than 12%, and preferably not greater than 10%.

7. Roof according to one of the preceding claims, wherein the system of low-emissive layers is chosen in such a way that, when applied to a sheet of light float glass 4 mm thick, it exhibits an emissivity which is not greater than 0.3 and preferably not greater than 0.2, and particularly preferably not greater than 0.1.

8. Roof according to Claim 7, wherein the system of low-emissive layers comprises at least one layer of doped tin oxide.

9. Roof according to Claim 8, wherein the layer of tin oxide is doped with fluorine and has a thickness which is not less than 200 nm.

10. Roof according to Claim 8 or Claim 9, wherein the system of low-emissive layers comprises, under the layer of tin oxide, a layer based on silica or on silicone oxycarbide.

11. Roof according to one of the preceding claims comprising a system of layers selectively reflecting the infrareds disposed between the outer glass and the LC film.

12. Roof according to Claim 11, wherein the infrared filter consists of a set of thin layers based on silver and of dielectric layers to enhance the selectivity.

13. Roof according to Claim 12, wherein the system of layers comprises at least three layers of silver, separated from one another by dielectric layers.

14. Roof according to one of the preceding claims, comprising at least one sheet of coloured glass whose light transmission under a thickness of 4 mm is at most equal to 50%.

15. Roof according to one of the preceding claims, comprising at least one sheet of glass whose selectivity is at least 1.2 and preferably at least 1.4.

16. Roof according to any one of the preceding claims, comprising at least one coloured separating sheet.

17. Roof according to one of the preceding claims, wherein the components are chosen such that the visible light reflection towards the interior of the vehicle, whatever the activated or non-activated state of the LC, does not exceed 20%, and preferably not 15%.

18. Roof according to one of the preceding claims, in which the combination of the components leads to a tinting in reflection towards the interior measured in the CIELab system, for the illuminant D65 under 10°, such that, in the activated or non-activated state
10 < L* < 55
-10 < a* < 3 and
-10 < b* < 5.
